# EUROPÄISCHE PATENTSCHRIFT

(11) **EP 3 362 259 B1**
(45) Veröffentlichungstag und Bekanntmachung des Hinweises auf die Patenterteilung: **17.02.2021**
(21) Anmeldenummer: 16778275.4
(22) Anmeldetag: 28.09.2016
(51) Int. Cl.: B29C 64/153, B29C 64/165, B29C 64/205, B33Y 10/00, B33Y 30/00, B22F 3/105

(54) **VORRICHTUNG UND VERFAHREN ZUM HERSTELLEN EINES DREIDIMENSIONALEN OBJEKTS**
DEVICE AND METHOD FOR PRODUCING A THREE-DIMENSIONAL OBJECT
DISPOSITIF ET PROCÉDÉ DE FABRICATION D'UN OBJET EN TROIS DIMENSIONS

(30) Priorität: 13.10.2015 DE 102015219866
(43) Veröffentlichungstag der Anmeldung: 22.08.2018
(73) Patentinhaber: EOS GmbH Electro Optical Systems, 82152 Krailling (DE)
(72) Erfinder: PATERNOSTER, Stefan, 82346 Andechs (DE); GRÜNBERGER, Stefan, 81739 München (DE); KNEISEL, Stefan, 81547 München (DE)
(74) Vertreter: Prüfer & Partner mbB Patentanwälte · Rechtsanwälte
(86) Internationale Anmeldenummer: PCT/EP2016/073118
(87) Internationale Veröffentlichungsnummer: WO 2017/063886

(56) Entgegenhaltungen:
- WO-A1-2014/208741
- WO-A1-2015/091485
- WO-A1-2015/106838
- DE-A1-102012 212 587

## Beschreibung

Die vorliegende Erfindung bezieht sich auf eine Vorrichtung und ein Verfahren zum Herstellen eines dreidimensionalen Objekts durch schichtweises Aufbringen und selektives Verfestigen eines Aufbaumaterials.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

WO 2015/091485 A1 beschreibt eine Vorrichtung zum selektiven Laserschmelzen, bei der ein aus einer VCSEL-Reihe (Vertical Cavity Surface Emitting Laser) oder einer VECSEL-Reihe (Vertical External Cavity Surface Emitting Laser) gebildeter Zeilenbelichter über eine aufgebrachte Pulverschicht verfährt und sie selektiv verfestigt.

In der zum Anmeldetag der vorliegenden Erfindung noch nicht veröffentlichten Patentanmeldung DE 10 2015 213 140 ist eine Vorrichtung zum Herstellen eines dreidimensionalen Objekts beschrieben, bei der ein Beschichter und ein Belichter gemeinsam oder getrennt voneinander über ein zum Aufbau des Objekts bestimmtes Baufeld verfahren werden.

Die WO 2015/106838 A1 beschreibt eine Vorrichtung zur Herstellung eines dreidimensionalen Objekts durch verfestigung eines Binders. Die Vorrichtung umfasst einen Träger, der sich entlang einer ersten Achse relativ zu einer Trägerplattform bidirektional bewegen kann, wobei der Träger dazu ausgebildet ist, verschieden Module aufzunehmen, um jeweils einen Schritt einer Reihe von Schritten zur Herstellung einer Schicht eines dreidimensionalen Objekts auszuführen. Die Vorrichtung umfasst ferner eine Steuerung, um eine Relativbewegung zwischen dem Träger und der Trägerplattform entlang der ersten Achse zu bewirken und während der Relativbewegung den Betrieb der Module zu steuern, um die Reihe von Schritten in einer vordefinierten Reihenfolge auszuführen

Die DE 10 2012 212 587 A1 beschreibt eine Vorrichtung zum Herstellen eines dreidimensionalen Objekts, bei der ein Beschichter und zwei Heizelemente über ein zum Aufbau des Objekts bestimmtes Baufeld verfahren werden, wobei das erste und das zweite Heizelement an beiden Seiten des Beschichters angeordnet sind.

Die Aufgabe der vorliegenden Erfindung besteht darin, eine alternative bzw. verbesserte Vorrichtung bzw. ein alternatives bzw. verbessertes Verfahren zum Herstellen eines dreidimensionalen Objekts durch schichtweises Aufbringen und selektives Verfestigen eines pulverförmigen Aufbaumaterials bereitzustellen.

Die Aufgabe wird gelöst durch eine Vorrichtung gemäß Anspruch 1 oder ein Verfahren gemäß Anspruch 9. Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtung weitergebildet sein oder jeweils umgekehrt.

Die erfindungsgemäße Vorrichtung dient zum Herstellen eines dreidimensionalen Objekts durch schichtweises Aufbringen und selektives Verfestigen eines Aufbaumaterials. Sie enthält einen in einer Beschichtungsrichtung über ein Baufeld bewegbaren Beschichter mit zumindest einer ersten Beschichtungseinheit zum Aufbringen einer Schicht des Aufbaumaterials auf das Baufeld und ein in der Beschichtungsrichtung über das Baufeld bewegbarer Belichter mit zumindest einer ersten Belichtungseinheit, die zum Aussenden einer zum Verfestigen des Aufbaumaterials geeigneten Strahlung geeignet ist, zum selektiven Verfestigen der aufgebrachten Schicht des Aufbaumaterials an Stellen, die einem Querschnitt des herzustellenden Objekts entsprechen. Die Vorrichtung ist ausgebildet und/oder gesteuert, die Schritte des Aufbringens und des selektiven Verfestigens zu wiederholen, bis das Objekt fertiggestellt ist. Der Beschichter enthält zumindest eine zweite Beschichtungseinheit, die in der Beschichtungsrichtung auf der anderen Seite der ersten Belichtungseinheit angeordnet ist als die erste Beschichtungseinheit. Zusätzlich oder alternativ enthält der Belichter zumindest eine zweite Belichtungseinheit, die in der Beschichtungsrichtung auf der anderen Seite der ersten Beschichtungseinheit angeordnet ist als die erste Belichtungseinheit. Mit einer solchen Vorrichtung kann beispielsweise die Herstellungszeit für das Objekt verglichen mit dem Fall, in dem nur eine Beschichtungseinheit auf einer Seite des Belichters angeordnet ist, erheblich verkürzt und somit die Produktivität gesteigert werden. Die Beschichtungseinheit(en) und Belichtungseinheit(en) können im Rahmen der Erfindung nämlich so miteinander in ihrer Bewegung koordiniert werden, dass Leerzeiten weitest gehend vermieden werden können.

Zudem sind die erste Belichtungseinheit und eventuelle weitere Belichtungseinheiten als Zeilenbelichter, insbesondere als VCSEL-basierte bzw. als VECSEL-basierte Zeilenbelichter ausgebildet. Dadurch kann beispielsweise ein besonders effizientes Verfestigen des Aufbaumaterials mittels Strahlung durchgeführt werden. Insbesondere wird in diesem Zusammenhang auf die Offenbarung der eingangs genannten WO 2015/091485 A1 verwiesen.

Vorzugsweise enthält die Vorrichtung zwei oder mehr Beschichtungseinheiten und zwei oder mehr Belichtungseinheiten, wobei die Beschichtungseinheiten und die Belichtungseinheiten in der Beschichtungsrichtung abwechselnd angeordnet sind, wobei vorzugsweise die beiden in der Beschichtungsrichtung zuvorderst und zuletzt liegenden Einheiten entweder beide eine Beschichtungseinheit oder beide eine Belichtungseinheit sind. Dadurch kann beispielsweise die Herstellungszeit für das Objekt weiter verkürzt und somit die Produktivität weiter gesteigert werden. Besonders bevorzugt (siehe auch die Ausführungen zur bevorzugten Anzahl der Beschichtungseinheiten im Vergleich zu der der Belichtungseinheiten) ist es, dass die beiden in der Beschichtungsrichtung zuvorderst und zuletzt liegenden Einheiten jeweils Beschichtungseinheiten sind.

Vorzugsweise enthält die Vorrichtung zwei oder mehr Beschichtungseinheiten und zwei oder mehr Belichtungseinheiten, wobei zwischen zwei Belichtungseinheiten zumindest eine Beschichtungseinheit angeordnet ist, wobei vorzugsweise die beiden in der Beschichtungsrichtung zuvorderst und zuletzt liegenden Einheiten jeweils eine Beschichtungseinheit sind. Dadurch kann beispielsweise die Herstellungszeit für das Objekt auch bei einer Doppelbeschichtung verkürzt und somit die Produktivität gesteigert werden.

Es ist weiterhin bevorzugt, dass die Anzahl der Beschichtungseinheiten größer ist, besonders bevorzugt um die Zahl 1 größer ist, als die Anzahl der Belichtungseinheiten. Damit übersteigt also die Anzahl an Beschichtungseinheiten die der Belichtungseinheiten, was insbesondere finanzielle Einsparungseffekte mit sich bringt: Belichtungseinheiten sind derzeit in der Regel teurer in der Beschaffung, da komplizierter in ihren Funktionen, als Beschichtungseinheiten. Hinzu kommt, dass auch der Gesamtbetrieb durch diese Maßnahme vereinfacht werden kann: Jede Belichtungseinheit muss in der Regel aktiv betrieben werden, d.h. insbesondere angesteuert werden können. Dies bedeutet, dass jeder Belichtungseinheit Signalverbindungen zugeordnet sind. Dagegen ist eine aktive Steuerung von Beschichtungseinheiten in deren Betrieb nicht zwangsläufig nötig, so dass durch eine höhere Anzahl von Beschichtungseinheiten als Belichtungseinheiten auch prozesstechnisch eine Vereinfachung realisierbar ist.

Vorzugsweise ist der Beschichter und/oder der Belichter dazu ausgebildet, sowohl bei einer Bewegung in der Beschichtungsrichtung als auch bei einer Bewegung in einer der Beschichtungsrichtung entgegengesetzten Richtung eine Schicht des Aufbaumaterials auf das Baufeld aufzubringen bzw. die aufgebrachte Schicht des Aufbaumaterials zu verfestigen. Dadurch kann beispielsweise ein Betrieb der Vorrichtung in zwei Richtungen, nämlich der Beschichtungsrichtung und ihrer entgegengesetzten Richtung erfolgen.

Vorzugsweise sind die erste Beschichtungseinheit und/oder eventuelle weitere Beschichtungseinheiten sowie die erste Belichtungseinheit und/oder eventuelle weitere Belichtungseinheiten höhenverstellbar, insbesondere in ihrer Höhe steuerbar, in der Vorrichtung angebracht. Dadurch können beispielsweise während des Betriebs alle eben genannten Einheiten jeweils auf eine für den momentanen Betrieb der Vorrichtung geeignete Höhe eingestellt bzw. gesteuert werden.

Vorzugsweise enthält die Vorrichtung weiter einen höhenverstellbaren Träger, der zum Halten der aufgebrachten Pulverschichten bestimmt ist. Dadurch kann beispielsweise die Schichtdicke der aufgebrachten Pulverschicht durch Absenken des Trägers eingestellt werden.

Vorzugsweise enthält die Vorrichtung weiter eine Strahlungsheizung zum Erwärmen der aufgebrachten Pulverschicht vor ihrer Verfestigung. Dadurch kann beispielsweise die aufgebrachte Pulverschicht vor ihrer Verfestigung vorgeheizt werden.

Das erfindungsgemäße Verfahren dient zum Herstellen eines dreidimensionalen Objekts durch schichtweises Aufbringen und selektives Verfestigen eines Aufbaumaterials. Es enthält die folgenden Schritte: Aufbringen einer Schicht des Aufbaumaterials mittels eines in einer Beschichtungsrichtung über ein Baufeld fahrenden Beschichters mit zumindest einer ersten Beschichtungseinheit, selektives Verfestigen der aufgebrachten Schicht des Aufbaumaterials an Stellen, die einem Querschnitt des herzustellenden Objekts entsprechen, mittels eines über das Baufeld fahrenden Belichters mit zumindest einer ersten Belichtungseinheit und Wiederholen der Schritte des Aufbringens und des selektiven Verfestigens, bis das Objekt fertiggestellt ist. Dabei enthält der Beschichter zumindest eine zweite Beschichtungseinheit, die in der Beschichtungsrichtung auf der anderen Seite der ersten Belichtungseinheit angeordnet ist als die erste Beschichtungseinheit. Zusätzlich oder alternativ enthält der Belichter zumindest eine zweite Belichtungseinheit, die in der Beschichtungsrichtung auf der anderen Seite der ersten Beschichtungseinheit angeordnet ist als die erste Belichtungseinheit. Mit einem solchen Verfahren kann beispielsweise die Herstellungszeit für das Objekt verglichen mit dem Fall, in dem nur eine Beschichtungseinheit auf einer Seite des Belichters angeordnet ist, erheblich verkürzt und somit die Produktivität gesteigert werden.

Zudem sind die erste Belichtungseinheit und eventuelle weitere Belichtungseinheiten als Zeilenbelichter, insbesondere als VCSEL-basierte bzw. als VECSEL-basierte Zeilenbelichter ausgebildet.

Vorzugsweise werden jede Beschichtungseinheit und jede Belichtungseinheit einmal in einer ersten Richtung über das Baufeld bewegt und anschließend jede Beschichtungseinheit und jede Belichtungseinheit in umgekehrter Reihenfolge einmal in einer der ersten Richtung entgegengesetzten Richtung über das Baufeld bewegt. Dadurch kann beispielsweise ein Betrieb der Vorrichtung in zwei Richtungen (also in der Beschichtungsrichtung und deren entgegengesetzten Richtung) erfolgen.

Vorzugsweise wird jede Beschichtungseinheit und/oder jede Belichtungseinheit um eine vordefinierte Höhe, vorzugsweise um die einer Schichtdicke des Aufbaumaterials entsprechende Höhe, höher eingestellt als die in der jeweiligen Bewegungsrichtung vorausgehende Beschichtungseinheit. In diesem Zusammenhang ist es besonders bevorzugt, dass mindestens ein Teil (vorzugsweise alle) der (insbesondere) Beschichtungseinheiten bzw. Belichtungseinheiten wie oben erwähnt höhenverstellbar in der Vorrichtung angebracht ist. Dadurch kann beispielsweise ein Aufbringen und Verfestigen von mehreren Schichten während eines Durchgangs, d.h. im Verlaufe einer Bewegung aller Beschichtungseinheiten und Verfestigungseinheiten in einer Bewegungsrichtung bzw. in der Bewegungsrichtung und der ihr entgegengesetzten Bewegungsrichtung, erfolgen.

Vorzugsweise werden zumindest eine Beschichtungseinheit und zumindest eine Belichtungseinheit so über das Baufeld bewegt, dass zeitgleich an verschiedenen Orten des Baufelds ein Beschichtungsvorgang und ein Verfestigungsvorgang stattfinden. Dadurch kann beispielsweise die Herstellungszeit für das Objekt weiter verkürzt und somit die Produktivität weiter gesteigert werden.

Vorzugsweise ist jede Belichtungseinheit eine Belichtungseinheit, die eine Strahlung aussendet, die zum Verfestigen des Aufbaumaterials geeignet ist, und eine Fokusebene der ausgesendeten Strahlung ist bei jeder Belichtungseinheit um eine vordefinierte Höhe, vorzugsweise um die einer Schichtdicke des Aufbaumaterials entsprechende Höhe, höher eingestellt als diejenige der in der jeweiligen Bewegungsrichtung vorausgehenden Belichtungseinheit. Dadurch kann beispielsweise das Verfestigen des Aufbaumaterials mittels Strahlung durchgeführt werden, und das Einstellen der Fokusebene kann ein höhenverstellbares Anbringen der Belichtungseinheiten überflüssig machen bzw. ergänzen.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum schichtweisen Herstellen eines dreidimensionalen Objekts gemäß einer ersten Ausführungsform der vorliegenden Erfindung.
- Fig. 2a bis f: sind schematische Darstellungen eines Ablaufs eines Ausführungsbeispiels eines erfindungsgemäßen Verfahrens zum schichtweisen Herstellen eines dreidimensionalen Objekts mit der in Fig. 1 gezeigten Vorrichtung.
- Fig. 3a und b: sind schematische Darstellungen eines Ablaufs eines alternativen Ausführungsbeispiels eines erfindungsgemäßen Verfahrens zum schichtweisen Herstellen eines dreidimensionalen Objekts mit der in Fig. 1 gezeigten Vorrichtung.
- Fig. 4a bis d: sind schematische Draufsichten auf verschiedene Abwandlungen der Anordnungen von Beschichtungseinheiten und Belichtungseinheiten.

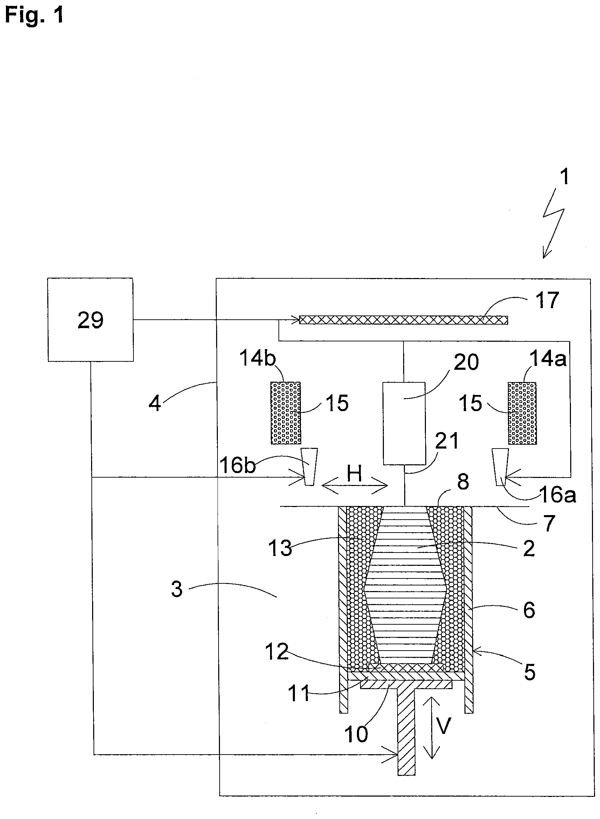

Im Folgenden wird mit Bezug auf Fig. 1 eine Vorrichtung 1 gemäß einer ersten Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum 0 Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 angebracht sein, auf der das Objekt 2 aufgebaut wird. Das Objekt 2 kann aber auch auf der Grundplatte 11 selber aufgebaut werden, die dann als Bauplattform dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter zwei Vorratsbehälter 14a, 14b für ein durch elektromagnetische Strahlung verfestigbares pulverförmiges Aufbaumaterial 15 und einen Beschichter 16, der zwei in einer horizontalen Richtung H über das Baufeld bewegbare Beschichtungseinheiten 16a, 16b enthält, zum Aufbringen des Aufbaumaterials 15 auf das Baufeld 8. In der Prozesskammer ist ferner eine Strahlungsheizung 17 angeordnet, die zum Beheizen des auf das Baufeld 8 aufgebrachten Aufbaumaterials 15 dient. Die Strahlungsheizung 17 ist beispielsweise als Infrarotstrahler gebildet.

Die Lasersintervorrichtung 1 enthält ferner einen ebenfalls in der horizontalen Richtung H über das Baufeld bewegbaren Belichter 20, der eine Laserstrahlung 21 erzeugt, die auf die Arbeitsebene 7 fokussiert wird. Gemäß der vorliegenden Ausführungsform enthält der Belichter 20 eine einzige Belichtungseinheit. Diese Belichtungseinheit 20 ist als Zeilenbelichter ausgebildet, der in der Lage ist, selektiv eine sich quer zu seiner Bewegungsrichtung erstreckende Linie zu belichten, die sich über den gesamten zu belichtenden Bereich erstreckt.

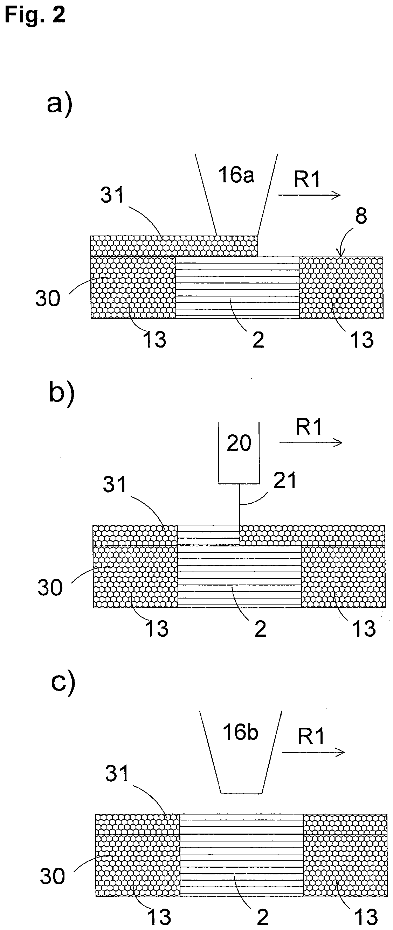

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit 29 geladen werden kann. Fig. 2a bis f zeigen Schritte eines Verfahrens zum Herstellen eines dreidimensionalen Objekts mittels der Vorrichtung 1.

In einem durch vorangegangene Prozessschritte aufgebauten Pulverbett 30 ist der verfestigte Teil des herzustellenden Objekts 2 von unverfestigt gebliebenem Pulver 13 umgeben. Vor dem in Fig. 2a gezeigten Schritt sind die Beschichtungseinheiten 16a und 16b und der Belichter 20 links des Baufelds 8 angeordnet.

Zum weiteren schichtweisen Aufbauen des Objekts 2 wird zunächst der Träger 10 um eine Höhe abgesenkt, die der gewünschten Schichtdicke entspricht. Dann wird wie in Fig. 2a gezeigt auf die zuvor aufgebrachte und selektiv verfestigte Pulverschicht 30 mittels einer Bewegung der ersten Beschichtungseinheit 16a in einer ersten Beschichtungsrichtung R1 pulverförmiges Aufbaumaterial 15 in Form einer ersten weiteren Pulverschicht 31 aufgebracht. Das Aufbringen erfolgt zumindest über den gesamten Querschnitt des herzustellenden Objekts 2, vorzugsweise über das gesamte Baufeld 8, also den Bereich der Arbeitsebene 7, der durch eine Vertikalbewegung des Trägers abgesenkt werden kann. Während und nach dem Aufbringen der ersten weiteren Pulverschicht 31 wird das aufgebrachte Pulver durch die Strahlungsheizung 17 vorgeheizt.

Anschließend fährt der Belichter 20 wie in Fig. 2b gezeigt in einer ersten Belichtungsrichtung, die vorzugsweise gleich der ersten Beschichtungsrichtung R1 ist, über das Baufeld und belichtet selektiv die erste weitere Pulverschicht 31. Dabei ist die Menge der durch die Laserstrahlung 21 eingebrachten Energie so eingestellt, dass an den dem Querschnitt des herzustellenden Objekts 2 entsprechenden Stellen eine vollständige Verfestigung des pulverförmigen Aufbaumaterials 15 erfolgt.

Anschließend führt die zweite Beschichtungseinheit 16b wie in Fig. 2b gezeigt eine Leerfahrt in der ersten Beschichtungsrichtung R1 durch, d.h. sie verfährt über das Baufeld 8, ohne Aufbaumaterial 15 aufzutragen.

Danach werden die oben beschriebenen Schritte in umgekehrter Richtung wiederholt.

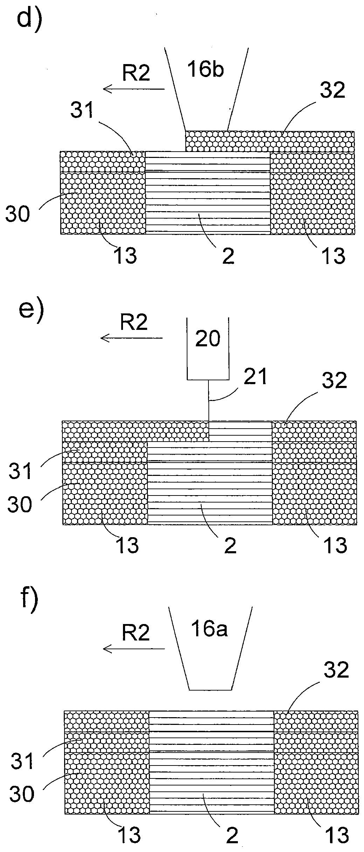

Zunächst wird der Träger 10 um eine Höhe abgesenkt, die der gewünschten Schichtdicke entspricht. Dann wird wie in Fig. 2d gezeigt auf die zuvor aufgebrachte und selektiv verfestigte Pulverschicht 31 mittels einer Bewegung der zweiten Beschichtungseinheit 16b in einer zweiten Beschichtungsrichtung R2, die der ersten Beschichtungsrichtung R1 entgegengesetzt ist, pulverförmiges Aufbaumaterial 15 in Form einer zweiten weiteren Pulverschicht 32 aufgebracht.

Dabei bedeutet entgegengesetzt nicht unbedingt einen Winkel von 180° in einer Draufsicht auf die Arbeitsebene, sondern nur, dass die zweite Beschichtungsrichtung R2 eine Komponente hat, die in die Gegenrichtung der ersten Beschichtungsrichtung R1 zeigt. Vorzugsweise liegt der Winkel zwischen der ersten und der zweiten Beschichtungsrichtung zwischen 15 und 210 Grad, in weiter bevorzugter Weise beträgt er 180°.

Auch das Aufbringen der zweiten weiteren Pulverschicht 32 erfolgt zumindest über den gesamten Querschnitt des herzustellenden Objekts 2, vorzugsweise über das gesamte Baufeld 8. Während und nach dem Aufbringen der zweiten weiteren Pulverschicht 32 wird das aufgebrachte Pulver durch die Strahlungsheizung 17 vorgeheizt.

Anschließend fährt der Belichter 20 wie in Fig. 2e gezeigt in einer zweiten Belichtungsrichtung, die vorzugsweise gleich der zweiten Beschichtungsrichtung R2 ist, über das Baufeld und belichtet selektiv die zweite weitere Pulverschicht 32. Wieder ist die Menge der durch die Laserstrahlung 21 eingebrachten Energie so eingestellt, dass an den dem Querschnitt des herzustellenden Objekts 2 entsprechenden Stellen eine vollständige Verfestigung des pulverförmigen Aufbaumaterials 15 erfolgt.

Anschließend führt die erste Beschichtungseinheit wie in Fig. 2f gezeigt eine Leerfahrt in der ersten Beschichtungsrichtung R1 über das Baufeld 8 durch.

Damit ist der Ausgangszustand wieder erreicht, und die in Fig. 2a bis f gezeigten Schritte werden solange wiederholt, bis das Objekt 2 fertiggestellt ist und der Prozesskammer 3 entnommen und von unverfestigt gebliebenem Aufbaumaterial 13 befreit werden kann. Während des Herstellvorgangs nehmen die Beschichtungseinheiten 16a und 16b wiederholt pulverförmiges Aufbaumaterial 15 aus den Vorratsbehältern 14a, 14b auf.

Da die Beschichtungseinheiten 16a, 16b jeweils für das Auftragen einer Pulverschicht bzw. eine Leerfahrt unterschiedliche Höheneinstellungen benötigen, sind sie höhenverstellbar, insbesondere in ihrer Höhe steuerbar, in der Vorrichtung 1 angebracht.

Gegenüber dem bekannten Stand der Technik ist die Vorrichtung 1 der vorliegenden Ausführungsform dadurch gekennzeichnet, dass auf beiden Seiten des Belichters 20 je eine Beschichtungseinheit 16a, 16b angeordnet ist. Dadurch wird ein Betrieb der Vorrichtung ermöglicht, wie er oben mit Bezug auf Fig. 2a bis f beschrieben ist. Durch diesen Betrieb kann die Herstellungszeit für das Objekt verglichen mit dem Fall, in dem nur eine Beschichtungseinheit auf einer Seite des Belichters angeordnet ist, erheblich verkürzt und somit die Produktivität der Vorrichtung gesteigert werden.

In einer Abwandlung des oben beschriebenen Verfahrens können auch die Funktionen Beschichtungsfahrt und Leerfahrt vertauscht sein. Nach dem oben beschriebenen Ablauf führt die Beschichtungseinheit 16a zunächst gemäß Fig. 2f (des vorangegangenen Zyklus) eine Leerfahrt in der Richtung R2 durch, kehrt dann um und führt gemäß Fig. 2a (des folgenden Zyklus) eine Beschichtungsfahrt in der Richtung R1 durch. Ebenso führt die Beschichtungseinheit 16b zunächst gemäß Fig. 2c eine Leerfahrt in der Richtung R1 durch, kehrt dann um und führt gemäß Fig. 2d eine Beschichtungsfahrt in der Richtung R2 durch. Stattdessen kann eine der Beschichtungseinheiten oder beide vor ihrer Umkehr eine Beschichtungsfahrt und nach ihrer Umkehr eine Leerfahrt durchführen. Als zusätzlicher Effekt kann dadurch die die für den Aufheizvorgang nutzbare Heizzeit kann verlängert werden.

In einer weiteren Abwandlung kann auch eine der Beschichtungseinheiten oder beide sowohl vor als auch nach ihrer Umkehr eine Beschichtungsfahrt durchführen, bei der jeweils eine Pulverteilschicht mit einer verringerten Dicke aufgetragen wird, wobei durch die Summe der Dicken der beiden Pulverteilschicht die gewünschte Gesamtdicke der Pulverschicht ergibt. Bei einer solchen Doppelbeschichtung (Aufbringen einer zu verfestigenden Pulverschicht in Form von zwei hintereinander aufgebrachten Pulverteilschichten) ergeben sich, wie weiter unten mit Bezug auf 4d beschrieben, vor allem bei der Verwendung von Altpulver Vorteile wie z.B. eine Qualitätsverbesserung der hergestellten Produkte.

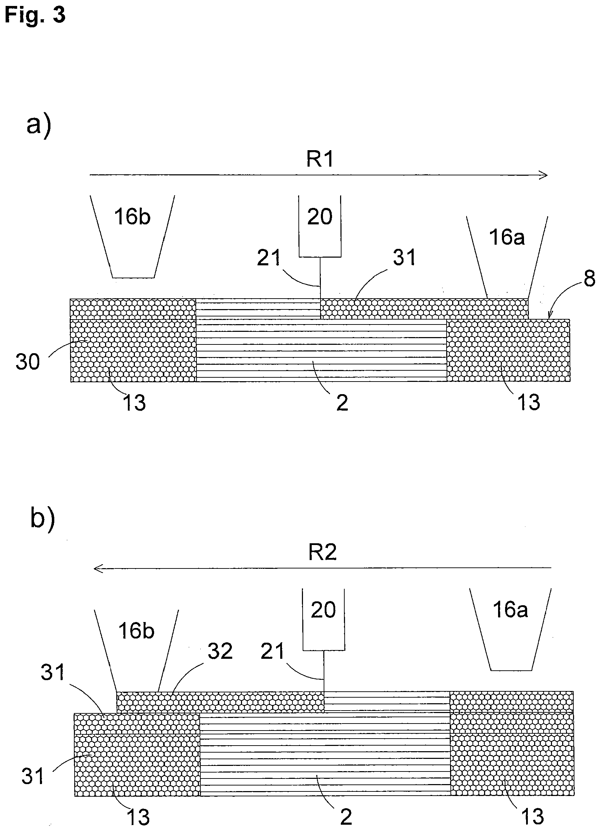

Fig. 3a und b zeigen Schritte eines alternativen Verfahrens zum Herstellen eines dreidimensionalen Objekts mittels der Vorrichtung 1. Dieses alternative Verfahren unterscheidet sich von dem in Fig. 2a bis f gezeigten Verfahren darin, dass der Belichter 20 und die Beschichtungseinheiten 16a, 16b gemeinsam über das Baufeld verfahren werden anstatt getrennt voneinander. Alle anderen Merkmale des oben beschriebenen Verfahrens können auch auf das alternative Verfahren übertragen werden.

Fig. 3a zeigt einen Verfahrensschritt, bei dem die in Fig. 2a bis c gezeigten Verfahrensschritte miteinander kombiniert werden. Die erste Beschichtungseinheit 16a verfährt in der ersten Beschichtungsrichtung R1 über das Baufeld 8 und trägt die erste weitere Pulverschicht 31 auf, die dann durch die Strahlungsheizung 17 vorgeheizt wird. Noch während die erste Beschichtungseinheit 16a über das Baufeld verfährt, fährt im Abstand dahinter bereits der Belichter 21 ebenfalls in der ersten Beschichtungsrichtung R1 über den bereits fertig aufgetragenen Bereich der ersten weitere Pulverschicht 31 und verfestigt diesen selektiv. Im Abstand hinter dem Belichter führt die zweite Beschichtungseinheit 16b eine Leerfahrt in der ersten Beschichtungsrichtung R1 durch.

Fig. 3b zeigt eine Wiederholung des in Fig. 3a gezeigten Verfahrensschritts in umgekehrter Richtung und stellt eine Kombination der in Fig. 2d bis f gezeigten Verfahrensschritte dar. Die zweite Beschichtungseinheit 16b trägt in der zweiten Beschichtungsrichtung R2 die zweite weitere Pulverschicht 32 auf, die dann durch die Strahlungsheizung 17 vorgeheizt wird. Im Abstand dahinter fährt der Belichter 21 ebenfalls in der zweiten Beschichtungsrichtung R2 über den bereits fertig aufgetragenen Bereich der zweiten weiteren Pulverschicht 32 und verfestigt diesen selektiv. Im Abstand hinter dem Belichter führt die erste Beschichtungseinheit 16a eine Leerfahrt in der zweiten Beschichtungsrichtung R2 durch.

Damit ist der Ausgangszustand wieder erreicht, und die in Fig. 3a und b gezeigten Schritte werden solange wiederholt, bis das Objekt 2 fertiggestellt ist und der Prozesskammer 3 entnommen und von unverfestigt gebliebenem Aufbaumaterial 13 befreit werden kann.

Weil bei diesem alternativen Verfahren nicht gewartet wird, bis eine Einheit über das Baufeld gefahren ist, bevor die nächste Einheit ihre Fahrt beginnt, finden zeitgleich an verschiedenen Orten des Baufelds ein Beschichtungsvorgang und ein Verfestigungsvorgang statt. Dadurch kann die Herstellungszeit für das Objekt weiter verkürzt und die Produktivität weiter gesteigert werden.

Auch hier kann wie bei der Abwandlung des mit Bezug auf Fig. 2 beschriebenen Verfahrens eine der Beschichtungseinheiten oder beide vor ihrer Umkehr eine Beschichtungsfahrt und nach ihrer Umkehr eine Leerfahrt durchführen oder sowohl vor als auch nach ihrer Umkehr eine Beschichtungsfahrt für eine Pulverteilschicht verringerter Dicke durchführen.

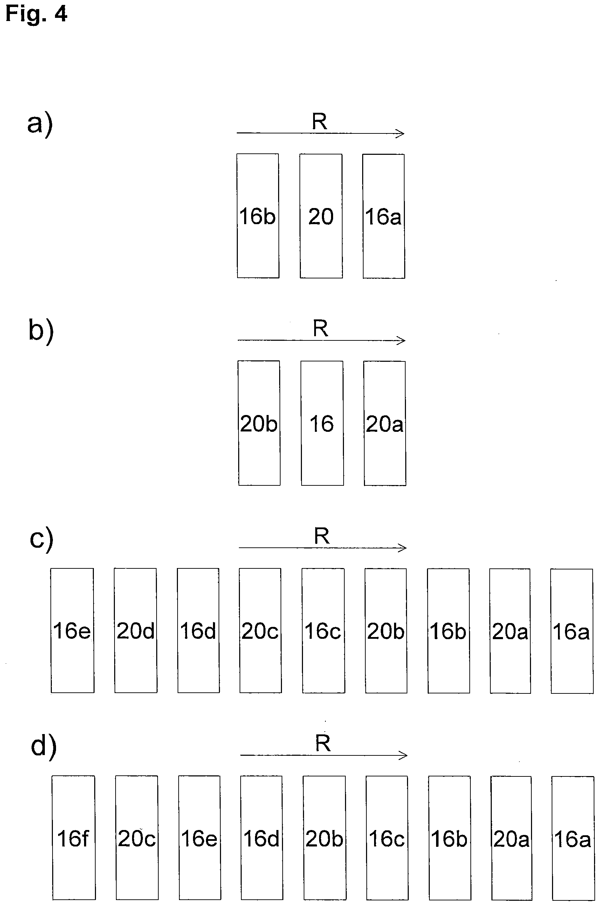

Fig. 4a bis d zeigen verschiedene Abwandlungen der in Fig. 1 gezeigten Vorrichtung. Diese Abwandlungen unterscheiden sich untereinander in der Anzahl und Anordnung der Beschichtungseinheiten und Belichtungseinheiten.

Fig. 4a zeigt schematisch die in Fig. 1 gezeigte Anordnung in einer Draufsicht. Der Belichter 20 enthält eine einzige Belichtungseinheit, während der Beschichter 16 zwei Beschichtungseinheiten 16a, 16b enthält, die in der Beschichtungsrichtung R beidseitig des Belichters, also vor und hinter dem Belichter angeordnet sind. Die Beschichtungseinheiten sind in ihrer Anordnung sozusagen an dem Belichter "gespiegelt".

Fig. 4b zeigt eine umgekehrte Anordnung. Statt wie in Fig. 4a die Beschichtungseinheit zu verdoppeln und an dem Belichter zu spiegeln, ist hier die Belichtungseinheit verdoppelt und an dem Beschichter gespiegelt. Der Beschichter 16 enthält also in diesem Fall eine einzige Beschichtungseinheit, während der Belichter 20 zwei Belichtungseinheiten 20a, 20b enthält, die in der Beschichtungsrichtung R beidseitig des Beschichters, also vor und hinter dem Beschichter angeordnet sind.

Der Betrieb einer Vorrichtung mit dieser Anordnung verläuft analog zu dem in Fig. 2 und 3 gezeigten Betrieb der in Fig. 1 gezeigten Vorrichtung. Dabei führt beispielsweise jeweils die vorlaufende Belichtungseinheit eine Leerfahrt durch, die Beschichtungseinheit trägt die neue Pulverschicht auf, und die jeweils nachlaufende Belichtungseinheit führt die Verfestigung der neu aufgebrachten Pulverschicht durch.

Ähnlich wie bei der Abwandlung der mit Bezug auf Fig. 2 und 3 beschriebenen Verfahren kann eine der Belichtungseinheiten oder beide vor ihrer Umkehr eine Belichtungsfahrt und nach ihrer Umkehr eine Leerfahrt durchführen oder sowohl vor als auch nach ihrer Umkehr eine Belichtungsfahrt mit verringerter Energie, wobei in den beiden Teilbelichtungen eingebrachte Gesamtenergie zum Verfestigen des Aufbaumaterials ausreicht.

Auch mit dieser Anordnung kann also die Herstellungszeit für das Objekt verkürzt und die Produktivität gesteigert werden. Aufgrund der höheren Kosten einer Belichtungseinheit gegenüber einer Beschichtungseinheit wird jedoch vorzugsweise wie in Fig. 4a gezeigt die Beschichtungseinheit verdoppelt und gespiegelt.

Fig. 4c zeigt eine Anordnung, bei sowohl der Beschichter 16 mehr als eine Beschichtungseinheit enthält als auch der Belichter 20 mehr als eine Belichtungseinheit enthält. Die Beschichtungseinheiten 16a-16e und die Belichtungseinheiten 20a-20d sind in der Beschichtungsrichtung abwechselnd angeordnet, so dass jede Beschichtungseinheit (außer den zuvorderst bzw. zuletzt angeordneten) von zwei Belichtungseinheiten und jede Belichtungseinheit von zwei Beschichtungseinheiten (außer den zuvorderst bzw. zuletzt angeordneten) umgeben ist. Vorzugsweise ist die Gesamtzahl der Einheiten ungerade, so dass die beiden in der Beschichtungsrichtung B zuvorderst und zuletzt liegenden Einheiten entweder beide eine Beschichtungseinheit oder beide eine Belichtungseinheit sind. In Fig. 4c ist der Fall gezeigt, bei dem diese beiden Einheiten beide eine Beschichtungseinheit 16a, 16e sind, was aufgrund der höheren Kosten einer Belichtungseinheit die bevorzugte Anordnung ist.

Der Betrieb einer Vorrichtung mit dieser Anordnung verläuft analog zu dem in Fig. 2 und 3 gezeigten Betrieb der in Fig. 1 gezeigten Vorrichtung. Zu Beginn sind alle Beschichtungs- und Belichtungsvorrichtungen in der Figur links des Baufelds 8 angeordnet. Zunächst fährt die erste Beschichtungseinheit 16a in der Beschichtungsrichtung R über das Baufeld 8 und trägt eine Pulverschicht auf, die dann durch die Strahlungsheizung 17 vorgeheizt wird und durch die erste Belichtungseinheit 20a verfestigt wird. Es folgen die zweite Beschichtungseinheit 16b und die zweite Belichtungseinheit 20b und so weiter, bis die letzte Beschichtungseinheit 16e ihre Leerfahrt über das Baufeld 8 beendet hat. Anschließend wird der Betrieb in der entgegengesetzten Richtung mit umgekehrter Reihenfolge wiederholt. Dabei trägt die jetzt vorderste Beschichtungseinheit 16e eine Pulverschicht auf, durch die Belichtungseinheit 20d verfestigt wird und so weiter, bis die jetzt hinten liegende Beschichtungseinheit 16a ihre Leerfahrt über das Baufeld 8 beendet hat.

Auch hierbei können die einzelnen Einheiten wie in Fig. 2 gezeigt getrennt oder wie in Fig. 3 gezeigt gemeinsam über das Baufeld verfahren werden. Bei getrenntem Verfahren kann vor dem Aufbringen jeder neuen Pulverschicht der Träger 10 um die gewünschte Schichtdicke abgesenkt werden. Das ist beim gemeinsamen Fahren der Einheiten über das Baufeld jedoch nicht möglich. Für diesen Fall sind die Beschichtungseinheiten 16a-16e und die Belichtungseinheiten 20a-20d höhenverstellbar, insbesondere in ihrer Höhe steuerbar, in der Vorrichtung 1 angebracht. Beim Verfahren über das Baufeld 8 ist dann jede Beschichtungseinheit um eine vordefinierte Höhe, vorzugsweise um die einer Schichtdicke des Aufbaumaterials entsprechende Höhe, höher eingestellt ist als die in der jeweiligen Bewegungsrichtung vorausgehende Beschichtungseinheit.

In ähnlicher Weise ist jede Belichtungseinheit um eine vordefinierte Höhe, vorzugsweise um die einer Schichtdicke des Aufbaumaterials entsprechende Höhe, höher eingestellt als die in der jeweiligen Bewegungsrichtung vorausgehende Belichtungseinheit. Alternativ oder ergänzend zu einer Höhenverstellung der Belichtungseinheit kann bei ihnen auch eine Fokusebene der ausgesendeten Strahlung bei jeder Belichtungseinheit um eine vordefinierte Höhe, vorzugsweise um die einer Schichtdicke des Aufbaumaterials entsprechende Höhe, höher eingestellt sein als diejenige der in der jeweiligen Bewegungsrichtung vorausgehenden Belichtungseinheit.

Bei einer Vorrichtung, bei der aufeinanderfolgende Schichten in unterschiedlicher Richtung aufgetragen werden, muss zwischen dem Aufbringen der beiden Schichten sowohl der Beschichter als auch der Belichter in den Stillstand abgebremst werden, die Richtung des Antriebs umgekehrt werden und dann wieder auf die erforderliche Arbeitsgeschwindigkeit beschleunigt werden. Das stelle eine Nebenzeit dar, die nicht zum produktiven Betrieb der Vorrichtung genutzt werden kann.

Durch die abwechselnde Anordnung mehrerer Beschichtungs- und Belichtungseinheiten hintereinander können mehrere Schichten aufgebracht und verfestigt werden, bevor ein solcher Umkehrvorgang erforderlich ist. Dadurch fällt die für das Umkehren erforderliche Zeit weniger ins Gewicht, als wenn es nach jedem Aufbringen und Verfestigen einer Schicht erforderlich ist. Dadurch kann die Herstellungszeit für das Objekt weiter verkürzt und die Produktivität weiter gesteigert werden.

Auch hier kann wie bei der Abwandlung des mit Bezug auf Fig. 2 beschriebenen Verfahrens eine der Beschichtungseinheiten oder beide vor ihrer Umkehr eine Beschichtungsfahrt und nach ihrer Umkehr eine Leerfahrt durchführen oder sowohl vor als auch nach ihrer Umkehr eine Beschichtungsfahrt für eine Pulverteilschicht verringerter Dicke durchführen.

Fig. 4d zeigt eine ähnliche Anordnung wie Fig. 4c, nur dass hier zwischen jeder Belichtungseinheit 20a-20c zwei Beschichtungseinheiten 16b-16e angeordnet sind. Wieder ist die vorzugsweise Anordnung gezeigt, bei der die beiden in der Beschichtungsrichtung B zuvorderst und zuletzt liegenden Einheiten beide eine Beschichtungseinheit 16a, 16f sind.

Der Betrieb einer Vorrichtung mit dieser Anordnung verläuft analog zu dem Betrieb der in Fig. 4c gezeigten Vorrichtung. Allerdings besteht hierbei jede zu verfestigende Pulverschicht aus zwei hintereinander aufgebrachten Pulverteilschichten, die dann gemeinsam belichtet und somit verfestigt werden. Dabei wird die jeweils erste Pulverteilschicht durch die Strahlungsheizung beheizt, bevor die jeweils zweite Pulverteilschicht aufgebracht wird. Diese wird ihrerseits durch die Strahlungsheizung beheizt, bevor die erste und zweite Pulverteilschicht gemeinsam belichtet und dadurch selektiv verfestigt werden.

Das Aufbringen einer zu verfestigenden Pulverschicht in Form von zwei hintereinander aufgebrachten Pulverteilschichten (Doppelbeschichtung) geschieht dadurch, dass jeweils zwei Beschichtungseinheiten über das Baufeld verfahren, bevor die nächste Belichtungseinheit über das Baufeld verfahren wird. Die jeweils hinten liegende Beschichtungseinheit führt bei dieser Anordnung keine Leerfahrt durch, sondern bringt bei ihrem ersten Verfahren über das Baufeld die erste Pulverteilschicht auf und bei ihrem zweiten Verfahren in der entgegengesetzten Richtung die zweite Pulverteilschicht. Somit kann eine Doppelbeschichtung auch bereits mit der in Fig. 4a gezeigten Anordnung verwirklicht werden.

Auch hierbei können die einzelnen Einheiten wie in Fig. 2 gezeigt getrennt oder wie in Fig. 3 gezeigt gemeinsam über das Baufeld verfahren werden, und die Beschichtungseinheiten 16a-16f und die Belichtungseinheiten 20a-20c sind höhenverstellbar, insbesondere in ihrer Höhe steuerbar, in der Vorrichtung 1 angebracht, bzw. die Fokusebene der ausgesendeten Strahlung der Belichtungseinheiten 20a-20c ist einstellbar. In diesem Fall ist jede Beschichtungseinheit beim Verfahren über das Baufeld 8 vorzugsweise um die einer Schichtdicke einer Pulverteilschicht entsprechende Höhe höher eingestellt ist als die in der jeweiligen Bewegungsrichtung vorausgehende Beschichtungseinheit, und jede Belichtungseinheit (bzw. ihre Fokusebene) ist vorzugsweise um die einer Schichtdicke einer aus zwei Pulverteilschichten gebildeten Pulvergesamtschicht entsprechende Höhe höher eingestellt ist als die in der jeweiligen Bewegungsrichtung vorausgehende Belichtungseinheit.

Die Doppelbeschichtung hat vor allem Vorteile bei der Verwendung von Altpulver, das bereits beim früheren Herstellen eines Objekts verwendet worden war und als unverfestigtes Aufbaumaterial übrig geblieben ist. Ab einem bestimmten Anteil von Altpulver an dem Aufbaumaterial kann die Qualität der hergestellten Objekte sinken. Durch das getrennte Beheizen der einzelnen Pulverteilschichten bei der Doppelbeschichtung kann eine homogenere Temperaturteilung erzielt werden, was zu einer Qualitätsverbesserung der hergestellten Produkte führt bzw. bei gleichbleibender Produktqualität einen höheren Anteil von Altpulver und damit eine wirtschaftlichere Produktion ermöglicht.

Durch die in Fig. 4d gezeigte Anordnung kann auch bei einer Doppelbeschichtung die Herstellungszeit für das Objekt verkürzt und die Produktivität gesteigert werden.

Anstelle von zwei können auch mehr Beschichtungseinheiten zwischen einer Belichtungseinheit angeordnet sein, wobei das Aufbringen einer zu verfestigende Pulverschicht in Form von mehr als zwei hintereinander aufgebrachten Pulverteilschichten geschieht.

Merkmale dieser Anordnungen können, soweit möglich, beliebig miteinander kombiniert werden. So ist z.B. eine Anordnung möglich, in der zwischen zwei Belichtungseinheiten teilweise nur eine Beschichtungseinheit angeordnet ist und teilweise zwei oder mehr.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines Aufbaumaterials durch selektives Einbringen von Energie angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser) umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen.

Es können verschiedene Arten von Aufbaumaterialien verwendet werden, insbesondere Pulver wie z.B. Metallpulver, Kunststoffpulver, Keramikpulver, Sand, gefüllte oder gemischte Pulver.

## Patentansprüche

1. Vorrichtung (1) zum Herstellen eines dreidimensionalen Objekts (2) durch schichtweises Aufbringen und selektives Verfestigen eines Aufbaumaterials (15), enthaltend:
einen in einer Beschichtungsrichtung (R) über ein Baufeld (8) bewegbaren Beschichter (16) mit zumindest einer ersten Beschichtungseinheit (16a) zum Aufbringen einer Schicht (31) des Aufbaumaterials (15) auf das Baufeld (8) und
einen in der Beschichtungsrichtung (R) über das Baufeld (8) bewegbaren Belichter (20) mit zumindest einer ersten Belichtungseinheit (20a), die zum Aussenden einer zum Verfestigen des Aufbaumaterials geeigneten Strahlung (21) geeignet ist, zum selektiven Verfestigen der aufgebrachten Schicht (31) des Aufbaumaterials (15) an Stellen, die einem Querschnitt des herzustellenden Objekts (2) entsprechen,
wobei die Vorrichtung (1) ausgebildet und/oder gesteuert ist, die Schritte des Aufbringens und des selektiven Verfestigens zu wiederholen, bis das Objekt (2) fertiggestellt ist,
wobei der Beschichter (16) zumindest eine zweite Beschichtungseinheit (16b) enthält, die in der Beschichtungsrichtung (R) auf der anderen Seite der ersten Belichtungseinheit (20a) angeordnet ist als die erste Beschichtungseinheit (16a), und/oder
der Belichter (20) zumindest eine zweite Belichtungseinheit (20b) enthält, die in der Beschichtungsrichtung (R) auf der anderen Seite der ersten Beschichtungseinheit (16a) angeordnet ist als die erste Belichtungseinheit (20a), und
wobei die erste Belichtungseinheit (20a) und eventuelle weitere Belichtungseinheiten (20b-20d) als Zeilenbelichter, insbesondere als VCSEL-basierte oder als VECSEL-basierte Zeilenbelichter, ausgebildet ist oder sind.

2. Vorrichtung (1) gemäß Anspruch 1, die zwei oder mehr Beschichtungseinheiten (16a-16e) und zwei oder mehr Belichtungseinheiten (20a-20d) enthält,
wobei die Beschichtungseinheiten (16a-16e) und die Belichtungseinheiten (20a-20d) in der Beschichtungsrichtung (R) abwechselnd angeordnet sind,
wobei vorzugsweise die beiden in der Beschichtungsrichtung (R) zuvorderst und zuletzt angeordneten Einheiten entweder beide eine Beschichtungseinheit oder beide eine Belichtungseinheit sind.

3. Vorrichtung (1) gemäß Anspruch 1, die zwei oder mehr Beschichtungseinheiten (16a-16f) und zwei oder mehr Belichtungseinheiten (20a-20c) enthält,
wobei in der Beschichtungsrichtung (R) zwischen zwei Belichtungseinheiten (20a-20c) zumindest eine Beschichtungseinheit (16b-16e) angeordnet ist,
wobei vorzugsweise die beiden in der Beschichtungsrichtung zuvorderst und zuletzt angeordneten Einheiten jeweils eine Beschichtungseinheit (16a, 16f) sind.

4. Vorrichtung (1) gemäß einem der Ansprüche 1 bis 3, wobei die Anzahl der Beschichtungseinheiten (16a-16e) größer ist, bevorzugt um die Zahl 1 größer ist, als die Anzahl der Belichtungseinheiten (20a-20d).

5. Vorrichtung (1) gemäß einem der Ansprüche 1 bis 4,
wobei der Beschichter (16) dazu ausgebildet ist, sowohl bei einer Bewegung in der Beschichtungsrichtung (R1) als auch bei einer Bewegung in einer der Beschichtungsrichtung (R1) entgegengesetzten Richtung (R2) eine Schicht (31, 32) des Aufbaumaterials (15) auf das Baufeld (8) aufzubringen.

6. Vorrichtung (1) gemäß einem der Ansprüche 1 bis 5, wobei
der Belichter (20) dazu ausgebildet ist, sowohl bei einer Bewegung in der Beschichtungsrichtung (R1) als auch bei einer Bewegung in einer der Beschichtungsrichtung (R1) entgegengesetzten Richtung (R2) die aufgebrachte Schicht (31, 32) des Aufbaumaterials (15) zu verfestigen und/oder wobei
die erste Beschichtungseinheit (16a) und/oder eventuelle weitere Beschichtungseinheiten (16b-16f) höhenverstellbar, insbesondere in ihrer Höhe steuerbar, in der Vorrichtung (1) angebracht sind und/oder wobei
die erste Belichtungseinheit (20a) und/oder eventuelle weitere Belichtungseinheiten (20b-20d) höhenverstellbar, insbesondere in ihrer Höhe steuerbar, in der Vorrichtung (1) angebracht sind.

7. Vorrichtung (1) gemäß einem der Ansprüche 1 bis 6, die weiter einen höhenverstellbaren Träger (10, 11) enthält, der zum Halten der aufgebrachten Pulverschichten bestimmt ist.

8. Vorrichtung (1) gemäß einem der Ansprüche 1 bis 7, die weiter eine Strahlungsheizung (17) zum Erwärmen der aufgebrachten Pulverschicht (31, 32) vor ihrer Verfestigung enthält.

9. Verfahren zum Herstellen eines dreidimensionalen Objekts (2) durch schichtweises Aufbringen und selektives Verfestigen eines Aufbaumaterials (15) mit den Schritten:
Aufbringen einer Schicht (31) des Aufbaumaterials (15) auf ein Baufeld (8) mittels eines in einer Beschichtungsrichtung (R) über das Baufeld (8) fahrenden Beschichters (16) mit zumindest einer ersten Beschichtungseinheit (16a),
selektives Verfestigen der aufgebrachten Schicht (31) des Aufbaumaterials (15) an Stellen, die einem Querschnitt des herzustellenden Objekts (2) entsprechen, mittels eines in der Beschichtungsrichtung (R) über das Baufeld (8) fahrenden Belichter (20) mit zumindest einer ersten Belichtungseinheit (20a), die zum Aussenden einer zum Verfestigen des Aufbaumaterials geeigneten Strahlung (21) geeignet ist, und
Wiederholen der Schritte des Aufbringens und des selektiven Verfestigens, bis das Objekt (2) fertiggestellt ist,
wobei der Beschichter (16) zumindest eine zweite Beschichtungseinheit (16b) enthält, die in der Beschichtungsrichtung (R) auf der anderen Seite der ersten Belichtungseinheit (20a) angeordnet ist als die erste Beschichtungseinheit (16a), und/oder
der Belichter (20) zumindest eine zweite Belichtungseinheit (20b) enthält, die in der Beschichtungsrichtung (R) auf der anderen Seite der ersten Beschichtungseinheit (16a) angeordnet ist als die erste Belichtungseinheit (20b), und
wobei die erste Belichtungseinheit (20a) und eventuelle weitere Belichtungseinheiten (20b-20d) als Zeilenbelichter, insbesondere als VCSEL-basierte oder als VECSEL-basierte Zeilenbelichter, ausgebildet ist oder sind.

10. Verfahren gemäß Anspruch 9, wobei jede Beschichtungseinheit (16a-16f) und jede Belichtungseinheit (20a-20d) einmal in einer ersten Richtung (R1) über das Baufeld (8) bewegt werden und anschließend jede Beschichtungseinheit (16a-16f) und jede Belichtungseinheit (20a-20d) in umgekehrter Reihenfolge einmal in einer der ersten Richtung (R1) entgegengesetzten Richtung (R2) über das Baufeld (8) bewegt werden.

11. Verfahren gemäß Anspruch 9 oder 10, wobei
jede Beschichtungseinheit (16a-16f) um eine vordefinierte Höhe, vorzugsweise um die einer Schichtdicke des Aufbaumaterials entsprechende Höhe, höher eingestellt wird als die in der jeweiligen Bewegungsrichtung (R1, R2) vorausgehende Beschichtungseinheit und/oder
jede Belichtungseinheit (20a-20d) um eine vordefinierte Höhe, vorzugsweise um die einer Schichtdicke des Aufbaumaterials entsprechende Höhe, höher eingestellt wird als die in der jeweiligen Bewegungsrichtung (R1, R2) vorausgehende Belichtungseinheit.

12. Verfahren gemäß einem der Ansprüche 9 bis 11, wobei zumindest eine Beschichtungseinheit (16a-16f) und zumindest eine Belichtungseinheit (20a-20d) so über das Baufeld (8) bewegt werden, dass zeitgleich an verschiedenen Orten des Baufelds (8) ein Beschichtungsvorgang und ein Verfestigungsvorgang stattfinden.

13. Verfahren gemäß einem der Ansprüche 9 bis 12, wobei
eine Fokusebene der ausgesendeten Strahlung bei jeder Belichtungseinheit (20a-20d) um eine vordefinierte Höhe, vorzugsweise um die einer Schichtdicke des Aufbaumaterials entsprechende Höhe, höher eingestellt ist als diejenige der in der jeweiligen Bewegungsrichtung vorausgehenden Belichtungseinheit.

## Claims

1. A device (1) for producing a three-dimensional object (2) by layer-wise applying and selectively solidifying a building material (15), the device comprising:
a recoater (16) that can be moved in an application direction (R) across a build area (8), the recoater having at least a first recoating unit (16a) for applying a layer (31) of the building material (15) to the build area (8) and
an irradiation device (20) that can be moved in the application direction (R) across the build area (8), the irradiation device having at least a first irradiation unit (20a) adapted to emit a radiation (21) suitable for solidifying the building material for selectively solidifying the applied layer (31) of the building material (15) at positions that correspond to a cross-section of the object (2) to be produced,
wherein the device (1) is configured and/or controlled to repeat the steps of applying and selectively solidifying until the object (2) is completed,
wherein the recoater (16) comprises at least a second recoating unit (16b) that is arranged at the other side of the first irradiation unit (20a) than the first recoating unit (16a) with respect to the application direction (R) and/or
the irradiation device (20) comprises at least a second irradiation unit (20b) that is arranged at the other side of the first recoating unit (16a) than the first irradiation unit (20a) with respect to the application direction (R), and
wherein the first irradiation unit (20a) and possible further irradiation units (20b-20d) is or are designed as bar irradiation device(s), in particular as VCSEL-based or as VECSEL-based bar irradiation device(s).

2. The device (1) according to claim 1, comprising two or more recoating units (16a-16e) and two or more irradiation units (20a-20d),
wherein the recoating units (16a-16e) and the irradiation units (20a-20d) are arranged alternately in the application direction (R),
wherein preferably both units that are arranged first and last in the application direction (R) are either both a recoating unit or both an irradiation unit.

3. The device (1) according to claim 1, comprising two or more recoating units (16a-16f) and two or more irradiation units (20a-20c),
wherein, with respect to the application direction (R), at least one recoating unit (16b-16e) is arranged between two irradiation units (20a-20c),
wherein preferably both units that are arranged first and last in the application direction each are a recoating unit (16a, 16f).

4. The device (1) according to one of claims 1 to 3, wherein the number of recoating units (16a-16e) is larger, preferably larger by the number 1, than the number of irradiation units (20a-20d).

5. The device (1) according to one of claims 1 to 4, wherein the recoater (16) is configured to apply a layer (31, 32) of the building material (15) to the build area (8) both upon moving in the application direction (R1) as well as upon moving in a direction (R2) opposite the application direction (R1).

6. The device (1) according to one of claims 1 to 5, wherein the irradiation device (20) is configured to solidify the applied layer (31, 32) of the building material (15) both upon moving in the application direction (R1) as well as upon moving in a direction (R2) opposite the application direction (R1) and/or
wherein the first recoating unit (16a) and/or possible further recoating units (16b-16f) are arranged in the device (1) so as to be adjustable in height, in particular controllable in height, and/or
wherein the first irradiation unit (20a) and/or possible further irradiation units (20b-20d) are arranged in the device (1) so as to be adjustable in height, in particular controllable in height.

7. The device (1) according to one of claims 1 to 6, further comprising a height-adjustable support (10, 11) intended to support the applied powder layers.

8. The device (1) according to one of claims 1 to 7, further comprising a radiant heater (17) for heating the applied powder layer (31, 32) before solidification.

9. A method of producing a three-dimensional object (2) by layer-wise applying and selectively solidifying a building material (15), the method comprising the steps of:
applying a layer (31) of the building material (15) to a build area (8) by means of a recoater (16) that moves across the build area (8) in an application direction (R), the recoater having at least a first recoating unit (16a),
selectively solidifying the applied layer (31) of the building material (15) at positions that correspond to a cross-section of the object (2) to be produced by means of an irradiation device (20) that moves across the build area (8) in the application direction (R), the irradiation device having at least a first irradiation unit (20a) adapted to emit a radiation (21) suitable for solidifying the building material and
repeating the steps of applying and selectively solidifying until the object (2) is completed,
wherein the recoater (16) comprises at least a second recoating unit (16b) that is arranged at the other side of the first irradiation unit (20a) than the first recoating unit (16a) with respect to the application direction (R) and/or
the irradiation device (20) comprises at least a second irradiation unit (20b) that is arranged at the other side of the first recoating unit (16a) than the first irradiation unit (20b) with respect to the application direction (R), and
wherein the first irradiation unit (20a) and possible further irradiation units (20b-20d) is or are designed as bar irradiation device(s), in particular as VCSEL-based or as VECSEL-based bar irradiation device(s).

10. The method according to claim 9, wherein each recoating unit (16a-16f) and each irradiation unit (20a-20d) are moved once across the build area (8) in a first direction (R1) and subsequently each recoating unit (16a-16f) and each irradiation unit (20a-20d) are moved once across the build area (8) in a direction (R2) opposite the first direction (R1) in reverse order.

11. The method according to claim 9 or 10, wherein each recoating unit (16a-16f) is set higher by a predefined amount, preferably by the amount corresponding to a layer thickness of the building material, than the recoating unit preceding in the respective direction of movement (R1, R2) and/or
wherein each irradiation unit (20a-20d) is set higher by a predefined amount, preferably by the amount corresponding to a layer thickness of the building material, than the irradiation unit preceding in the respective direction of movement (R1, R2).

12. The method according to one of claims 9 to 11, wherein at least one recoating unit (16a-16f) and at least one irradiation unit (20a-20d) are moved across the build area (8) in such a way that an application process and an irradiation process take place simultaneously at different locations of the build area (8).

13. The method according to one of claims 9 to 12,
wherein a focal plane of the emitted radiation of each irradiation unit (20a-20d) is set higher by a predefined amount, preferably by the amount that corresponds to a layer thickness of the building material, than the focal plane of the irradiation unit preceding in the respective direction of movement.

## Revendications

1. Dispositif (1) de fabrication d'un objet (2) tridimensionnel par application par couches et solidification sélective d'un matériau de construction (15), comprenant :
un enducteur (16) déplaçable dans une direction d'enduction (R) par-dessus un champ de construction (8) avec au moins une première unité d'enduction (16a) pour appliquer une couche (31) du matériau de construction (15) sur le champ de construction (8) et
un équipement d'exposition (20) déplaçable dans la direction d'enduction (R) par-dessus le champ de construction (8) avec au moins une première unité d'exposition (20a) qui est adaptée pour émettre un rayonnement (21) adapté pour solidifier le matériau de construction, pour une solidification sélective de la couche (31) appliquée du matériau de construction (15) en des emplacements qui correspondent à une section transversale de l'objet (2) à fabriquer,
dans lequel le dispositif (1) est conçu et/ou commandé pour répéter les étapes de l'application et de la solidification sélective, jusqu'à ce que l'objet (2) soit fabriqué,
dans lequel l'enducteur (16) contient au moins une seconde unité d'enduction (16b) qui, dans la direction d'enduction (R), est agencée sur l'autre côté de la première unité d'exposition (20a) en tant que première unité d'enduction (16a), et/ou
l'équipement d'exposition (20) contient au moins une deuxième unité d'exposition (20b) qui, dans la direction d'enduction (R), est agencée sur l'autre côté de la première unité d'enduction (16a) en tant que première unité d'exposition (20a), et
dans lequel la première unité d'exposition (20a) et d'éventuelles autres unités d'exposition (20b-20d) est ou sont conçue(s) en tant qu'équipement d'exposition de lignes, en particulier en tant qu'équipement d'exposition de lignes fondé sur une VCSEL ou fondé sur une VECSEL.

2. Dispositif (1) selon la revendication 1 qui contient deux ou plusieurs unités d'enduction (16a-16e) et deux ou plusieurs unités d'exposition (20a-20d),
dans lequel les unités d'enduction (16a-16e) et les unités d'exposition (20a-20d) sont agencées en alternance dans la direction d'enduction (R),
dans lequel de préférence les deux unités agencées en tout premier et en dernier dans la direction d'enduction (R) sont soit toutes deux une unité d'enduction soit toutes deux une unité d'exposition.

3. Dispositif (1) selon la revendication 1 qui contient deux ou plusieurs unités d'enduction (16a-16f) et deux ou plusieurs unités d'exposition (20a-20c),
dans lequel, dans la direction d'enduction (R) entre deux unités d'exposition (20a-20c), est agencée au moins une unité d'enduction (16b-16e),
dans lequel de préférence les deux unités agencées en tout premier et en dernier dans la direction d'enduction sont respectivement une unité d'enduction (16a, 16f).

4. Dispositif (1) selon l'une des revendications 1 à 3, dans lequel le nombre des unités d'enduction (16a-16e) est supérieur, de préférence supérieur du nombre 1, au nombre des unités d'exposition (20a-20d).

5. Dispositif (1) selon l'une des revendications 1 à 4,
dans lequel l'enducteur (16) est conçu pour appliquer une couche (31, 32) du matériau de construction (15) sur le champ de construction (8), tant lors d'un déplacement dans la direction d'enduction (R1) que lors d'un déplacement dans une direction (R2) opposée à la direction d'enduction (R1).

6. Dispositif (1) selon l'une des revendications 1 à 5, dans lequel
l'équipement d'exposition (20) est conçu pour solidifier la couche (31, 32) appliquée du matériau de construction (15), tant lors d'un déplacement dans la direction d'enduction (R1) que lors d'un déplacement dans une direction (R2) opposée à la direction d'enduction (R1), et/ou dans lequel
la première unité d'enduction (16a) et/ou d'éventuelles autres unités d'enduction (16b-16f) sont montées dans le dispositif (1) de façon à être réglables en hauteur, en particulier commandables dans leur hauteur, et/ou dans lequel
la première unité d'exposition (20a) et/ou d'éventuelles autres unités d'exposition (20b-20d) sont montées dans le dispositif (1) de façon à être réglables en hauteur, en particulier commandables dans leur hauteur.

7. Dispositif (1) selon l'une des revendications 1 à 6, qui contient en outre un support (10, 11) réglable en hauteur qui est destiné à maintenir les couches de poudre appliquées.

8. Dispositif (1) selon l'une des revendications 1 à 7, qui contient en outre un chauffage par rayonnement (17) pour chauffer la couche de poudre (31, 32) appliquée avant sa solidification.

9. Procédé de fabrication d'un objet (2) tridimensionnel par application par couches et solidification sélective d'un matériau de construction (15), avec les étapes suivantes :
application d'une couche (31) du matériau de construction (15) sur un champ de construction (8) au moyen d'un enducteur (16) circulant dans une direction d'enduction (R) par-dessus le champ de construction (8) avec au moins une première unité d'enduction (16a)
solidification sélective de la couche (31) appliquée du matériau de construction (15) en des emplacements qui correspondent à une section transversale de l'objet (2) à fabriquer, au moyen d'un équipement d'exposition (20) circulant dans la direction d'enduction (R) par-dessus le champ de construction (8) avec au moins une première unité d'exposition (20a) qui est adaptée pour émettre un rayonnement (21) adapté pour solidifier le matériau de construction, et
répétition des étapes de l'application et de la solidification sélective, jusqu'à ce que l'objet (2) soit fabriqué,
dans lequel l'enducteur (16) contient au moins une seconde unité d'enduction (16b) qui, dans la direction d'enduction (R), est agencée sur l'autre côté de la première unité d'exposition (20a) en tant que première unité d'enduction (16a), et/ou
l'équipement d'exposition (20) contient au moins une deuxième unité d'exposition (20b) qui, dans la direction d'enduction (R), est agencée sur l'autre côté de la première unité d'enduction (16a) en tant que première unité d'exposition (20b), et
dans lequel la première unité d'exposition (20a) et d'éventuelles autres unités d'exposition (20b-20d) est ou sont conçue(s) en tant qu'équipement d'exposition de lignes, en particulier en tant qu'équipement d'exposition de lignes fondé sur une VCSEL ou fondé sur une VECSEL.

10. Procédé selon la revendication 9, dans lequel chaque unité d'enduction (16a-16f) et chaque unité d'exposition (20a-20d) sont déplacées une fois dans une première direction (R1) par-dessus le champ de construction (8) et ensuite chaque unité d'enduction (16a-16f) et chaque unité d'exposition (20a-20d) sont déplacées une fois dans l'ordre inverse par-dessus le champ de construction (8) dans une direction (R2) opposée à la première direction (R1).

11. Procédé selon la revendication 9 ou 10, dans lequel
chaque unité d'enduction (16a-16f) est réglée plus haut d'une hauteur prédéfinie, de préférence de la hauteur correspondant à une épaisseur de couche du matériau de construction, que l'unité d'enduction plus avant dans la direction de déplacement (R1, R2) respective, et/ou
chaque unité d'exposition (20a-20d) est réglée plus haut d'une hauteur prédéfinie, de préférence de la hauteur correspondant à une épaisseur de couche du matériau de construction, que l'unité d'exposition plus avant dans la direction de déplacement (R1, R2) respective.

12. Procédé selon l'une des revendications 9 à 11, dans lequel au moins une unité d'enduction (16a-16f) et au moins une unité d'exposition (20a-20d) sont déplacées par-dessus le champ de construction (8) de telle sorte qu'une opération d'enduction et une opération de solidification aient lieu simultanément en des endroits différents du champ de construction (8).

13. Procédé selon l'une des revendications 9 à 12, dans lequel
un plan focal du rayonnement émis pour chaque unité d'exposition (20a-20d) est réglé plus haut d'une hauteur prédéfinie, de préférence de la hauteur correspondant à une épaisseur de couche du matériau de construction, que celui de l'unité d'exposition plus avant dans la direction de déplacement respective.
